(19) Europäisches Patentamt
European Patent Office
Office européen des brevets

(11) **EP 2 646 955 B1**

(12) **EUROPÄISCHE PATENTSCHRIFT**

(45) Veröffentlichungstag und Bekanntmachung des Hinweises auf die Patenterteilung:
**04.03.2015 Patentblatt 2015/10**

(21) Anmeldenummer: **11794029.6**

(22) Anmeldetag: **29.11.2011**

(51) Int Cl.:
**G06K 19/077** (2006.01)    **G06F 3/041** (2006.01)

(86) Internationale Anmeldenummer:
**PCT/EP2011/005986**

(87) Internationale Veröffentlichungsnummer:
**WO 2012/072239 (07.06.2012 Gazette 2012/23)**

(54) **PORTABLER DATENTRÄGER UND VERFAHREN ZU SEINER KALIBRIERUNG**

PORTABLE DATA CARRIER AND METHOD FOR CALIBRATING THE SAME

SUPPORT DE DONNÉES PORTABLE ET PROCÉDÉ D'ÉTALONNAGE DE CELUI-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2010 DE 102010052983**

(43) Veröffentlichungstag der Anmeldung:
**09.10.2013 Patentblatt 2013/41**

(73) Patentinhaber: **Giesecke & Devrient GmbH 81677 München (DE)**

(72) Erfinder:
• **BALDISCHWEILER, Michael 81825 München (DE)**
• **ASCHAUER, Hans 81829 München (DE)**
• **SEYSEN, Martin 80809 München (DE)**

(56) Entgegenhaltungen:
**WO-A1-2007/113722    FR-A1- 2 728 710**

**Beschreibung**

Die vorliegende Erfindung betrifft einen portablen Datenträger mit einem als Eingabefeld eingerichteten, deformierbaren Datenträgerkörper mit mindestens drei Dehnungsmessstreifen, sowie ein Verfahren zur Kalibrierung des Eingabefelds und ein Verfahren zum Betrieb eines solchen portablen Datenträgers. Die Dehnungsmessstreifen und das durch sie geschaffene Eingabefeld können insbesondere als Eingabeeinrichtung des Datenträgers dienen.

Portable Datenträger mit Benutzerschnittstellen in Form von Eingabeeinrichtungen sind in verschiedenen Ausführungsformen bekannt. Portable Datenträger im Sinne der vorliegenden Schrift sind beispielsweise Chipkarten, Kreditkarten, Mobilfunkendgeräte, Smartphones und dergleichen. Als Eingabeeinrichtungen sind dabei beispielsweise einfache Taster, Tastaturen, Touchpads oder berührungsempfindliche Displays bekannt. Die Tastaturen sind beispielsweise als Folientastaturen ausgebildet. Das ortsaufgelöste Erkennen einer Berührung eines Touchpads oder eines berührungsempfindlichen Displays basiert beispielsweise auf kapazitiven, induktiven, optischen oder akustischen Erkennungsverfahren. Solche Eingabeeinrichtungen weisen allgemein den Nachteil auf, dass sie einen aufwändigen Aufbau, eine aufwändige Mechanik und/ oder eine aufwändige Auswerteelektronik erfordern, was zum einen die Herstellung solcher Eingabeeinrichtungen verteuert und zum anderen deren Lebensdauer begrenzt. Dies ist insbesondere problematisch in Datenträgern, die bauartbedingt wenig Bauraum für solche Eingabeeinrichtungen bereitstellen und/ oder in großen Stückzahlen hergestellt werden, wie es beispielsweise bei Chipkarten der Fall ist.

Daneben sind portable Datenträger mit einem deformierbaren Kartenkörper bekannt, welche mit Hilfe eines oder mehrerer Sensoren, wie beispielsweise Drucksensoren oder Dehnungsmessstreifen, einen auf den Kartenkörper ausgeübten Druck registrieren können. Der Kartenkörper kann somit als Benutzerschnittstelle und Eingabefläche dienen. Eine genaue Ortsauflösung, das heißt eine Bestimmung der Koordinaten des Druckpunkts, an dem eine beispielsweise punktförmige Kraft ausgeübt wurde, kann in bekannten portablen Datenträgern nur durch das Vorsehen einer großen Zahl solcher Sensoren realisiert werden, was einen solchen portablen Datenträger vom Aufbau her aufwändig und entsprechend teuer in der Herstellung macht. Wird in dem portablen Datenträger nur eine geringe Anzahl von Sensoren vorgesehen, so kann beispielsweise lediglich das Ausüben eins Drucks oder eine sehr grobe Ortsauflösung erreicht werden. Zum Beispiel kann es ausreichend sein, bestimmte Charakteristiken in einer Eingabe, beispielsweise eine Unterschrift auf dem Kartenkörper, zu erkennen, um somit einen Benutzer zu autorisieren, wobei solche Charakteristiken beispielsweise in dem Verlauf des Werts des elektrischen Widerstands von einem oder mehreren Dehnungsmessstreifen vorliegen.

Das Dokument WO2007/113722 A1 offenbart einen portablen Datenträger mit den Merkmalen des Oberbegriffs des unabhängigen Vorrichtungsanspruchs 7.

Aufgabe der vorliegenden Erfindung ist es daher, einen portablen Datenträger mit einem Eingabefeld anzugeben, der eine ortsaufgelöste Erfassung eines auf das Eingabefeld ausgeübten Drucks gestattet. Der portable Datenträger soll weiterhin kostengünstig sein und einen wenig aufwändigen Aufbau aufweisen.

Diese Aufgabe wird durch einen portablen Datenträger, ein Verfahren zur Kalibrierung, ein Verfahren zur Herstellung eines Datenträgers und ein Verfahren zur Bestimmung der Position eines Punktes eines Eingabefeldes auf einem deformierbaren Datenträgerkörper eines Datenträgers nach einem der unabhängigen Patentansprüche gelöst. Vorteilhafte Ausgestaltungen und Weiterbildungen sind in den abhängigen Ansprüchen angegeben.

Der vorliegenden Erfindung liegt die Erkenntnis zu Grunde, dass bereits bei Vorsehen von zumindest drei Dehnungsmessstreifen eine eindeutige Zuordnung von den erfassten elektrischen Widerständen zu einem ausgeübten Druck geschaffen werden kann, die eine Bestimmung der absoluten Position des Druckpunktes auf dem Kartenkörper, das heißt eine Bestimmung der Koordinaten des Druckpunktes gestattet. Dehnungsmessstreifen sind hierfür besonders geeignet, da sie wegen ihrer kleinen Abmessungen leicht in bzw. auf dem Kartenkörper angeordnet werden können. Zudem können Dehnungsmessstreifen hochempfindlich ausgelegt werden, so dass sich auch bei geringen Verformungen der elektrische Widerstand eines Dehnungsmessstreifens in leicht messbarer Weise ändert. Ein weiterer Vorteil des Einsatzes von Dehnungsmessstreifen besteht darin, dass diese mit einer ausreichenden Messgenauigkeit zu akzeptablen Preisen verfügbar sind.

Entsprechend umfasst der erfindungsgemäße portable Datenträger einen als Eingabefeld eingerichteten deformierbaren Datenträgerkörper mit mindestens drei Dehnungsmessstreifen. Auf dem portablen Datenträger ist ferner eine Erfassungseinrichtung vorgesehen und dazu eingerichtet, die Werte der elektrischen Widerstände der wenigstens drei Dehnungsmessstreifen zu erfassen, die sich ergeben, wenn auf einen Punkt des Eingabefeldes, im Folgenden als Druckpunkt bezeichnet, ein Druck mit einer Druckkraft, das heißt mit einer gegebenen Stärke der Kraft, ausgeübt wird. Weiterhin ist auf dem portablen Datenträger eine Speichereinrichtung vorgesehen, in der eine Abbildungsvorschrift zur Berechnung zumindest der Koordinaten des Druckpunkts und gegebenenfalls auch der Druckkraft durch Anwendung der Abbildungsvorschrift auf die erfassten Widerstandswerte der Dehnungsmessstreifen gespeichert ist.

Das erfindungsgemäße Verfahren zum Betrieb eines solchen portablen Datenträgers mit einem als Eingabefeld eingerichteten deformierbaren Datenträgerkörper mit mindestens drei Dehnungsmessstreifen, umfasst die Schritte:

A) Erfassen der infolge eines auf einen Druckpunkt des Eingabefeldes mit einer Druckkraft ausgeübten Drucks auftretenden Werte der elektrischen Widerstände der mindestens drei Dehnungsmessstreifen, und

B) Bestimmen der Koordinaten des Druckpunkts und gegebenenfalls zudem der Druckkraft durch Anwendung einer Abbildungsvorschrift auf die erfassten Werte der elektrischen Widerstände.

Im Zusammenhang mit der Beschreibung der vorliegenden Erfindung soll unter einem Eingabefeld auf einem deformierbaren Datenträgerkörper eines Datenträgers ein nicht notwendigerweise scharf abgegrenzter Bereich der Oberfläche dieses Datenträgerkörpers verstanden werden, innerhalb dessen ein Druck auf einen Punkt dieser Oberfläche eine messbare Änderung der Widerstände der Dehnungsmessstreifen hervorruft, welche Rückschlüsse auf die Position oder auf die Stärke des Drucks an dieser Position erlaubt. Bevorzugt bildet die gesamte Oberfläche des Datenträgerköpers oder des portablen Datenträgers das Eingabefeld

Unter einem deformierbaren Datenträgerkörper eines Datenträgers soll in diesem Zusammenhang ein elastisch deformierbarer, insbesondere ein biegsamer oder ein flexibler, vorzugsweise kartenförmiger Datenträgerkörper eines portablen Datenträgers verstanden werden. Beispiele für solche deformierbaren Datenträgerkörper sind Chipkarten oder Kreditkarten, beispielsweise im ID0-Format.

Dehnungsmessstreifen sind in den verschiedensten Bauformen bekannt und werden aus verschiedenen Materialien mittels verschiedener Verfahren hergestellt. Dehnungsmessstreifen (DMS) sind häufig lineare Dehnungsmessstreifen, die in einer bestimmten Richtung besonders empfindlich sind und in dieser Richtung mäanderförmig angeordnete Leiterstrukturen aufweisen. Es sind jedoch auch rosettenartige oder sternförmige Anordnungen von mäanderförmigen Leiterstrukturen bekannt, die entsprechende Deformationen in verschiedenen Richtungen erfassen können. In der vorliegenden Erfindung werden auch solche Anordnungen von Leiterstrukturen als Dehnungsmessstreifen bezeichnet. Diesen Strukturen ist gemeinsam, dass eine Deformation der Leiterstruktur beispielsweise aufgrund einer externen Krafteinwirkung, eine Widerstandsänderung der Leiterstruktur zur Folge hat. Von der Widerstandsänderung wiederum, welche mittels einer mit dem Dehnungsmessstreifen verbundenen Steuereinrichtung oder Erfassungseinrichtung detektiert werden kann, kann auf die mechanische Verformung des Dehnungsmessstreifens und somit des Datenträgerkörpers zurück geschlossen werden.

Der erfindungsgemäße portable Datenträger und das erfindungsgemäße Betriebsverfahren für einen solchen portablen Datenträger gestattet es, die Koordinaten von einem oder mehreren Druckpunkten, auf welche ein Druck mit einer vorzugsweise punktförmigen Druckkraft ausgeübt wird, zu bestimmen. Mit anderen Worten kann die absolute Lage des einen oder der mehreren Druckpunkte auf dem Eingabefeld des Datenträgerkörpers bestimmt werden. Vorzugsweise wird auch die Druckkraft bestimmt. Dies gestattet eine Vielzahl von Anwendungsmöglichkeiten. Beispielsweise kann das Eingabefeld, welches sich vorzugsweise über den gesamten Datenträgerkörper erstreckt, in ähnlicher Weise wie ein Touchpad betrieben werden.

Ebenso kann der Verlauf einer Eingabe auf dem Eingabefeld, das heißt eine Abfolge von Druckpunkten bestimmt werden. Damit ist es möglich, bestimmte Charakteristiken, wie beispielsweise den Geschwindigkeits- oder Druckkraft-Verlauf, während der Eingabe zu bestimmen und beispielsweise zur Handschriften- oder Unterschriftenerkennung oder -erfassung zu verwenden. Damit kann beispielsweise ein Benutzer des portablen Datenträgers charakterisiert oder autorisiert werden. Wird durch die Anwendung der Abbildungsvorschrift auf die erfassten Widerstandswerte der Dehnungsmessstreifen auch die Druckkraft bestimmt, so erhöht sich die Leistungsfähigkeit und Genauigkeit solcher Verfahren deutlich.

Der erfindungsgemäße portable Datenträgerkörper kann beispielsweise auch als Tastatur bzw. virtuelle Tastatur verwendet werden. Dazu können auf dem Datenträgerkörper im Bereich des Eingabefelds Bereiche nach Art einer Tastatur, das heißt Tastenfelder, gekennzeichnet werden, beispielsweise durch Aufdrucken oder durch Projektion. Mit Hilfe der Abbildungsvorschrift des portablen Datenträgers kann eine Eingabe, beispielsweise ein Druck auf das Eingabefeld, einem der Tastenfelder zugeordnet werden und vorzugsweise als entsprechende Tastatureingabe verarbeitet werden. Bei einer solchen Verwendung des erfindungsgemäßen Datenträgers sind die Anforderungen an die Genauigkeit der Abbildungsvorschrift im Vergleich zu der vorher beschriebenen Verwendung zur Handschriften- oder Unterschriftenerkennung oder -erfassung gering. Beispielsweise kann die Bestimmung der Koordinaten mit geringerer Genauigkeit erfolgen. Auf die Bestimmung der beim Druck ausgeübten Druckkraft kann verzichtet werden. Entsprechend verringert sich auch der Rechenaufwand bei der Anwendung der Abbildungsvorschrift und die Anforderungen an die Genauigkeit bei der Erfassung der elektrischen Widerstände der Dehnungsmessstreifen.

Erfindungsgemäß ist die Abbildungsvorschrift auf dem Datenträger hinterlegt, beispielsweise in einer Speichereinrichtung. Dadurch ist es zum einem möglich, unabhängig von externen Informationen die erfassten Widerstandswerte der Dehnungsmessstreifen auf die Koordinaten des Druckpunkts und gegebenenfalls auf die Druckkraft abzubilden. Die Abbildungsvorschrift kann dabei eine vom Typ des portablen Datenträgers abhängige Abbildungsvorschrift sein, die in allen portablen Datenträger des gleichen Typs verwendet wird, also beispielsweise in allen portablen Datenträgern mit den selben mechanischen Eigenschaften und der selben Anordnung der mindestens drei Dehnungsmessstreifen. Die erfindungsgemäß lokale Hinterlegung der Abbildungsvorschrift auf dem portablen Datenträger gestattet es jedoch auch eine für jeden portablen Datenträger individuelle Abbildungsvorschrift zu verwenden, die beispielsweise Variationen und Toleranzen, die sich zum Beispiel in der Positionierung der Dehnungsmessstreifen bei der Herstellung des erfindungsgemäßen portablen Datenträgers ergeben, ausgleicht. Entsprechend können beispielsweise die Anforderungen an die Genauigkeit der Positionierung der Dehnungsmessstreifen bei der Herstellung des portablen Datenträgers verringert werden. Die Abbildungsvorschrift kann dabei beispielsweise eine ausführbare Funktion oder ein oder mehrere Eingabeparameter für eine solche Funktion sein.

Die Ausführung der Abbildungsvorschrift, das heißt die Anwendung der Abbildungsvorschrift auf die von der Erfassungseinrichtung erfassten Widerstandswerte, geschieht in einer Recheneinrichtung, welche prinzipiell Teil des portablen Datenträgers oder extern zu diesem vorgesehen sein kann. In einer bevorzugten Ausgestaltung des portablen Datenträgers ist die Recheneinrichtung Teil des portablen Datenträgers. Somit können ohne Zuhilfenahme externer Rechenleistung aus den gemessenen Widerstandswerten der Dehnungsmessstreifen die Koordinaten und gegebenenfalls die Druckkraft eines auf das Eingabefeld ausgeübten Drucks bestimmt werden. Ein solcher portabler Datenträger kann somit als autonome Einheit verwendet werden, die Eingaben auf dem Eingabefeld unabhängig von externen Geräten verarbeiten kann.

Wird in dem portablen Datenträger eine Datenträger-individuelle Abbildungsvorschrift hinterlegt, die beispielsweise Herstellungstoleranzen ausgleicht, so wird die Abbildungsvorschrift vorzugsweise mit Hilfe eines Kalibrierungsverfahrens bestimmt, mit den Schritten:

a) Ausüben eines Drucks mit einer vorgegebenen Kraft auf einen vorgegebenen Kalibrierungspunkt des Eingabefeldes, wobei die vorgegebene Kraft und die Koordinaten des vorgegebenen Kalibrierungspunkts ein Eingangswerttupel bilden;

b) Erfassen der dabei auftretenden Werte der elektrischen Widerstände der wenigstens drei Dehnungsmessstreifen, wobei die erfassten elektrischen Widerstandswerte ein dem Eingangswerttupel zugehöriges Ausgangswerttupel bilden;

c) Wiederholen der Schritte a) und b) für eine Vielzahl von verschiedenen vorgegebenen Kalibrierungspunkten und/ oder vorgegebenen Kräften;

d) Bestimmen einer Abbildungsvorschrift, welche die erfassten Ausgangswerttupel auf die jeweils zugehörigen Eingangswerttupel oder auf die Koordinaten der Kalibrierungspunkte der jeweils zugehörigen Eingangswerttupel abbildet.

Unter einem Kalibrierungspunkt soll in diesem Zusammenhang ein Punkt des Eingabefeldes verstanden werden, dessen Koordinaten, das heißt dessen Position relativ zu einem geeignet gewählten Bezugspunkt, beispielsweise relativ zu einem Koordinatenursprung, bekannt ist.

Für eine Kalibrierung ist im Allgemeinen eine Mehrzahl von Kalibrierungspunkten erforderlich. Vorzugsweise ist, um eine ausreichende Genauigkeit der Kalibrierung zu erreichen, eine Vielzahl von Kalibrierungspunkten auf dem Eingabefeld vorgesehen. Zusammen mit dem bei der Kalibrierung ausgeübten Anpressdruck auf einen Kalibrierungspunkt bilden die Koordinaten des Kalibrierungspunktes ein Eingangswerttupel im Sinne des Kalibrierungsverfahrens gemäß der vorliegenden Erfindung, das heißt eine zusammengehörige Gruppe von Eingangswerten.

Da sich die elektrischen Widerstände der Dehnungsmessstreifen bei Ausübung eines vorzugsweise punktförmigen Drucks auf einen Punkt des Eingabefelds, insbesondere auf einen Kalibrierungspunkt ändern, bilden die bei der Ausübung eines Drucks mit vorgegebener Kraft auf einen vorgegebenen Kalibrierungspunkt gemessenen elektrischen Widerstandswerte der wenigstens drei Dehnungsmessstreifen ein Ausgangswerttupel im Sinne des Kalibrierungsverfahrens gemäß der vorliegenden Erfindung, das heißt eine zusammengehörige Gruppe von Ausgangswerten.

Die Wiederholung der Druckausübung und der Erfassung der dabei auftretenden Widerstandswerte für eine Vielzahl von verschiedenen, vorgegebenen Kalibrierungspunkten und/ oder vorgegebenen Kräften kann bei auf unterschiedliche Weisen erfolgen. Zum einen können die Kalibrierungspunkte bei der Druckausübung nacheinander angefahren werden und es können zeitlich nacheinander für jeden Kalibrierungspunkt unterschiedliche Kräfte ausgeübt werden. Andererseits ist es auch möglich, zunächst auf sämtliche Kalibrierungspunkte zeitlich nacheinander die gleiche Kraft auszuüben, und anschließend die Kraft zu verändern und damit wieder erneut sämtliche Kalibrierungspunkte anzufahren.

Das Ergebnis des Kalibrierungsverfahrens ist eine Vielzahl von Eingangswerttupeln, zu denen jeweils ein zugehöriges Ausgangswerttupel existiert. Anschließend wird eine Abbildungsvorschrift bestimmt, die die Vielzahl von Ausgangswerttupeln auf die jeweils zugehörigen Eingangswerttupel oder zumindest auf die Koordinaten der Kalibrierungspunkte der jeweils zugehörigen Eingangswerttupel abbildet. Da die Ausgangswerttupel aus Widerstandswerten der wenigstens drei Dehnungsmessstreifen bestehen, und da die Eingangswerttupel aus den vorgegebenen Kräften und vorgegebenen Positionen, vorzugsweise aus den Koordinaten, der Kalibrierungspunkte bestehen, erlaubt es diese Abbildungsvorschrift bei der späteren Verwendung des erfindungsgemäßen Datenträgers, einem gemessenen Widerstandswerttupel, welches sich in Folge eines auf einen Punkt des Eingabefeldes, das heißt auf einen Druckpunkt mit einer Druckkraft ausgeübten Drucks ergibt, die Koordinaten des Druckpunktes und gegebenenfalls auch die ausgeübte Druckkraft zu bestimmen.

Ein solches Kalibrierungsverfahren ist vorzugsweise Teil des Herstellungsverfahrens eines solchen portablen Datenträgers.

In einer vorteilhaften Ausgestaltung des Kalibrierungsverfahrens weist die Vielzahl der Kalibrierungspunkte eine regelmäßige Anordnung auf dem Datenträgerkörper auf, vorzugsweise eine matrixförmige Anordnung, besonders bevorzugt eine viereckige, rechteckige, quadratische oder dreieckige, insbesondere eine gleichseitig dreieckige Anordnung.

Vorzugsweise wird die Abbildungsvorschrift, die mit Hilfe des Kalibrierungsverfahrens bestimmt wird, nach dem Ablauf des Kalibrierungsverfahrens in einer Speichereinrichtung des portablen Datenträgers abgelegt. Auf diese Weise kann zur Anwendung der Abbildungsvorschrift auf erfasste Widerstandswerte im Anwendungsfall sehr leicht zugegriffen werden.

Bei der Durchführung des Kalibrierungsverfahrens wird der Druck mit der vorgegebenen Kraft auf die vorgegebenen Kalibrierungspunkte vorzugsweise mit Hilfe eines beweglichen Stifts, einer Luftdruckdüse oder eines Nadeldruckers oder ähnlicher Einrichtungen ausgeübt. Wichtig für die Auswahl eines geeigneten Werkzeugs zum Ausüben des Anpressdrucks beim Kalibrierungsverfahren ist die Genauigkeit der Positionierbarkeit dieses Werkzeugs und die Dosierbarkeit des Anpressdrucks, damit die Komponenten der Eingangswerttupel genügend genau bestimmt sind. Die Genauigkeit mit der diese Werte bestimmt werden können bestimmt auch die später mögliche Genauigkeit bei der Bestimmung der Koordinaten des Druckpunkts innerhalb des Eingabefeldes und der Druckkraft im Anwendungsfall des portablen Datenträgers.

Da im Anwendungsfall des Datenträgers die elektrischen Widerstände zweckmäßig durch eine Einrichtung erfasst werden, die auf oder in dem Datenträgerkörper integriert ist, kann diese Erfassungseinrichtung mit Vorteil auch bei der Erfassung der Werte der elektrischen Widerstände der Dehnungsmessstreifen bei der Kalibrierung verwendet werden.

Die Ermittlung der Abbildungsvorschrift im Rahmen des Kalibrierungsverfahrens erfolgt vorzugsweise mit Hilfe einer mehrdimensionalen Regressionsanalyse, welche die Vielzahl der beim Kalibrierungsverfahren erfassten Ausgangswerttupel und die Vielzahl der zugehörigen Eingangswerttupel verarbeitet. Während die Eingangswerttupel aus den Positionsdaten des jeweiligen Kalibrierungspunkts und der ausgeübten Kraft bestehen, also beispielsweise dreidimensionale Eingangswerttupel sind, ist die Dimension der Ausgangswerttupel durch die Anzahl der Dehnungsmessstreifen und damit durch die Anzahl der zu messenden Widerstandswerte bestimmt.

Vorzugsweise sind die Dehnungsmessstreifen auf dem deformierbaren Datenträgerkörper oder in dem Datenträgerkörper parallel zu oder auf den Kanten oder den Winkelhalbierenden eines vorzugsweise gleichseitigen Dreiecks oder eines Quadrats angeordnet. Derartige Anordnungen führen dazu, dass die Richtungen größter Messempfindlichkeit der üblicherweise verwendeten linearen Dehnungsmessstreifen möglichst gleich verteilt sind, so dass verschiedene Dehnungsmessstreifen nach Möglichkeit möglichst unterschiedliche Dehnungsereignisse auf der Oberfläche des Datenträgerkörpers erfassen.

Es hat sich gezeigt, dass Anordnungen der Dehnungsmessstreifen parallel zu oder auf den Kanten oder der Winkelhalbierenden eines vorzugsweise gleichseitigen Dreiecks, das heißt beispielsweise eine sternförmige oder dreiecksförmige Anordnungen oder davon abgeleitete Anordnungen der Dehnungsmessstreifen, bei denen die Richtungen maximaler Messempfindlichkeit der üblicherweise linearen Dehnungsmessstreifen vorzugsweise in einem Winkel von 120° oder 60° zueinander stehen oder auch Anordnungen parallel zu oder auf den Kanten oder den Winkelhalbierenden eines Quadrats, das heißt also Anordnungen, bei denen die Richtungen maximaler Messempfindlichkeit der Dehnungsmessstreifen vorzugsweise in einem Winkel von 90° oder 45° zueinander stehen, zu vergleichsweise genauen Positionsdaten führen.

In einer besonders bevorzugten Ausgestaltung weist der portable Datenträger genau drei lineare Dehnungsmessstreifen auf, die in der Mitte der Seiten eines gleichseitigen Dreiecks angeordnet sind, wobei die Richtungen maximaler Messempfindlichkeit jeweils entlang der Seiten des Dreiecks zeigen. In einer alternativen bevorzugten Ausgestaltung weist der portable Datenträger genau drei lineare Dehnungsmessstreifen auf, die auf den Winkelhalbierenden eines gleichseitigen Dreiecks symmetrisch zum Mittelpunkt des Dreiecks angeordnet sind, wobei die Richtungen maximaler Messempfindlichkeit jeweils zum Mittelpunkt des Dreiecks zeigen. In einer besonders bevorzugten Ausgestaltung weist der portable Datenträger genau vier lineare Dehnungsmessstreifen auf, die in der Mitte der Seiten eines Rechtecks angeordnet sind, wobei die Richtungen maximaler Messempfindlichkeit jeweils zum Mittelpunkt des Rechtecks zeigen. In einer alternativen bevorzugten Ausgestaltung weist der portable Datenträger genau vier lineare Dehnungsmessstreifen auf, die auf den Winkelhalbierenden eines Rechtecks symmetrisch zum Mittelpunkt des Rechtecks angeordnet sind, wobei die Richtungen maximaler Messempfindlichkeit jeweils zum Mittelpunkt oder entlang der Seiten des Rechtecks zeigen.

Das Eingabefeld ist im einfachsten Fall durch den zwischen den mindestens drei Dehnungsmessstreifen liegenden Bereich definiert. Das Eingabefeld kann jedoch in Abhängigkeit der Empfindlichkeit und Genauigkeit der Dehnungsmessstreifen und der Genauigkeit der Abbildungsvorschrift auch darüber hinausgehen. Im einfachsten Fall sind die Dehnungsmessstreifen im Randbereich des Datenträgerkörpers, beispielsweise in dessen Ecken, angeordnet.

Vorzugsweise werden die Dehnungsmessstreifen auf dem portablen Datenträger gemäß der vorliegenden Erfindung als gedruckte oder geätzte elektrisch leitfähige Strukturen ausgebildet. Diese Art der Herstellung der Dehnungsmessstreifen auf dem Datenträgerkörper bietet im Vergleich mit alternativen Möglichkeiten der Anbringung von beispielsweise Folien-Dehnungsmessstreifen Vorteile bezüglich Kosten, Robustheit und mechanischer Verbindung mit dem Datenträgerkörper.

Der Datenträgerkörper des portablen Datenträgers kann mehrschichtig ausgebildet sein. Verschiedene Schichten, vorzugsweise aus geeigneten Kunststoffmaterialien, können dazu, beispielsweise mittels Laminierens, verbunden werden. Um die Sensibilität eines in oder auf den Datenträgerkörper ein- oder aufgebrachten Dehnungsmessstreifens zu erhöhen, können eine oder mehrere Schichten des Datenträgerkörpers in dem Bereich, in dem in einer nahe benachbarten oder angrenzenden Schicht der Dehnungsmessstreifen angeordnet ist, mit einer oder mehreren Aussparungen versehen sein. D.h. die Aussparungen befinden sich in dem Datenträgerkörper vorzugsweise insbesondere seitlich und/oder oberhalb und/oder unterhalb des Dehnungsmessstreifens. Besonders bevorzugt befinden sich seitlich des Dehnungsmessstreifens Aussparungen, während oberhalb und unterhalb des Dehnungsmessstreifens keine Aussparungen vorgesehen sind. Dadurch wird die Verformung des Datenträgerkörpers im Bereich des Auflagepunktes, der dem entsprechenden Dehnungsmessstreifen zugeordnet ist und in der Regel in unmittelbarer Nähe des Dehnungsmessstreifens angeordnet ist, deutlicher ausfallen, wenn der Datenträgerkörper beim Ausüben einer Kraft auf den Datenträger auf dem Auflagepunkt gelagert ist. Entsprechend kann die Empfindlichkeit der Dehnungsmessstreifen erhöht werden, da sich mit dem Datenträgerkörper auch der Dehnungsmessstreifen stärker verformt und dementsprechend eine Widerstandsänderung über ein größeres Intervall von Widerstandswerten detektierbar ist. Die geschaffene Aussparung kann als Hohlraum ausgestaltet sein oder mit einem flexiblen oder kompressiblen Material vollständig oder teilweise gefüllt sein. Entsprechend kann der Grad der in Folge der Aussparung zusätzlichen Verformung eingestellt werden.

Nach einem weiteren bevorzugten Ausführungsbeispiel der Erfindung ist es vorgesehen, dass die Anschlussleitungen und Anschlusspunkte der Dehnungsmessstreifen, über welche die Werte der elektrischen Widerstände der Dehnungsmessstreifen erfasst werden, derart ausgestaltet oder angeordnet sind, dass die Dehnungsmessstreifen durch die Ausgestaltung bzw. die Anordnung der Anschlussleitungen und Anschlusspunkte elektrisch derart miteinander verschaltet sind, dass ein Strom, der durch je zwei Anschlusspunkte fließt, stets durch zwei elektrisch in Reihe geschaltete Dehnungsmessstreifen fließt. Auf diese Weise kann die Zahl der Anschlussleitungen verringert werden.

Besonders bevorzugt ist dabei eine Ausführungsform der Erfindung, bei der die Widerstände der Dehnungsmessstreifen Werte aufweisen, die der Hälfte der für Dehnungsmessstreifen, deren Widerstandswerte einzeln erfasst werden, üblichen Widerstandswerte besitzen. Solche üblichen Widerstandswerte sind 120,350 oder 1000 Ohm. Folglich betragen die Widerstandwerte der mindestens drei Dehnungsmessstreifen jeweils 60,175 oder 500 Ohm. Diese Maßnahme hängt damit zusammen, dass bei einer Reihenschaltung von je zwei Widerständen der Dehnungsmessstreifen die Summen-Widerstände den üblichen Widerständen entsprechen, falls die Widerstände der einzelnen Dehnungsmessstreifen auf die Hälfte reduziert werden. Damit ist der Vorteil verbunden, dass die verfügbare Messtechnik, insbesondere die dabei verwendeten Analog-Digital-Wandler, die für bestimmte übliche Widerstandswerte von Dehnungsmessstreifen ausgelegt sind, weiterhin verwendet werden können, da stets nur die Summen-Widerstände von zwei Widerständen gemessen werden. Ein weiterer Vorteil dieser Ausführungsbeispiele besteht darin, dass die Herstellung eines jeden einzelnen Dehnungsmessstreifens günstiger wird, da die nun verwendeten Dehnungsmessstreifen nur noch die Hälfte der Mäander üblicher Dehnungsmessstreifen aufweisen und entsprechend einfacher zu fertigen sind.

Bevorzugt ist ferner ein portabler Datenträger, bei dem die Erfassungseinrichtung zur Erfassung der elektrischen Widerstände einzelner Dehnungsmessstreifen aus Messungen der elektrischen Summen-Widerstände einer Mehrzahl paarweise in Reihe geschalteter Dehnungsmessstreifen eingerichtet ist. Diese Ausführungsform ist insbesondere vorteilhaft im Zusammenhang mit der paarweisen Reihenschaltung von Dehnungsmessstreifen, weil hierbei zur Ermittlung einzelner Widerstandsänderungen oder Widerstände eine Umrechnung von erfassten Summen-Widerständen auf Einzelwiderstände erforderlich ist. Diese Mehrzahl von Messung werden vorzugsweise zeitlich nacheinander durchgeführt.

Ausführungsbeispiele und Vorteile der Erfindung werden nachfolgend beispielhaft anhand der begleitenden Figuren erläutert. Die Beispiele stellen bevorzugte Ausführungsformen dar, die die Erfindung in keiner Weise beschränken. Die gezeigten Figuren sind schematische Darstellungen, die die realen Proportionen nicht widerspiegeln, sondern einer verbesserten Anschaulichkeit der verschiedenen Ausführungsbeispiele dienen.

Die Figuren zeigen:

Figur 1     eine erste bevorzugte Ausführungsform eines erfindungsgemäßen Datenträgers in Draufsicht;

Figur 2     eine zweite bevorzugte Ausführungsform eines erfindungsgemäßen Datenträgers in Draufsicht;

Figur 3     eine dritte bevorzugte Ausführungsform eines erfindungsgemäßen Datenträgers in Draufsicht;

Figur 4     eine vierte bevorzugte Ausführungsform eines erfindungsgemäßen Datenträgers in Draufsicht;

Figur 5     eine fünfte bevorzugte Ausführungsform eines erfindungsgemäßen Datenträgers in Draufsicht;

Figur 6     eine sechste bevorzugte Ausführungsform eines erfindungsgemäßen Datenträgers in Draufsicht;

Figur 7     eine siebte bevorzugte Ausführungsform eines erfindungsgemäßen Datenträgers in Draufsicht;

Figur 8     eine Darstellung der Ziffer "1" durch einzelne Punkte, die Messwerten entsprechen;

Figur 9     eine Darstellung der Ziffer "2" durch einzelne Punkte, die Messwerten entsprechen;

Figur 10     eine schematische Darstellung eines Tastenfelds;

Figur 11     eine weitere bevorzugte Ausführungsform des erfindungsgemäßen Datenträgers;

Figur 12     eine weitere bevorzugte Ausführungsform des erfindungsgemäßen Datenträgers;

Figur 13     eine weitere bevorzugte Ausführungsform des erfindungsgemäßen Datenträgers;

Figur 14     eine weitere bevorzugte Ausführungsform des erfindungsgemäßen Datenträgers mit einer schematischen Darstellung einer matrixförmigen Anordnung von Kalibrierungspunkten;

Figur 15     den Widerstandsverlauf bei drei Dehnungsmessstreifen für einen Druck mit drei verschiedenen Stärken des Anpressdrucks auf vier verschiedene Punkte einer matrixförmigen Anordnung von Kalibrierungspunkten; und

Figur 16     eine schematische Darstellung der Vielzahl von Ausgangswerttupeln.

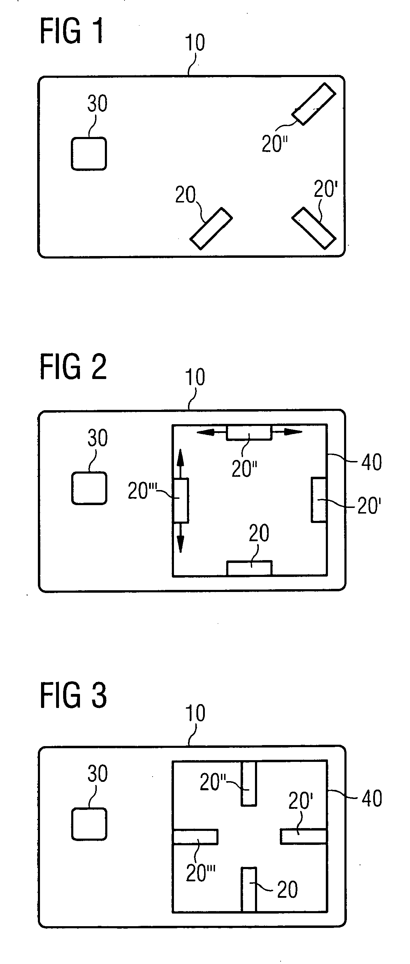

Ein portabler Datenträger, der in Figur 1 in Form einer Chipkarte dargestellt ist, umfasst einen Datenträgerkörper, der beispielsweise durch Laminieren verschiedener Kunststoffschichten gebildet ist. Andere Datenträgermaterialien sind gleichfalls einsetzbar, beispielsweise Papier oder Pappe. Der portable Datenträger umfasst einen in den Datenträgerkörper eingebetteten Chip 30, der neben einem Prozessor auch eine Speichereinrichtung enthält. Der Chip 30 beinhaltet vorzugsweise die zur Ausführung der erfindungsgemäßen Verfahren zur Kalibrierung und zur Ausführung der Abbildungs-Vorschrift erforderlichen Datenverarbeitungsmittel. Weiterhin sind auf dem Datenträgerkörper drei Dehnungsmessstreifen 20, 20', 20" angeordnet.

Bei der in Figur 2 dargestellten Ausführungsform eines portablen Datenträgers 10 sind vier lineare Dehnungsmessstreifen 20, 20', 20", 20"' auf den Kanten eines Rechtecks angeordnet, wobei deren empfindliche Richtung parallel zu diesen Kanten zeigt. Die vier Dehnungsmessstreifen 20, 20', 20", 20"' sind symmetrisch zum Mittelpunkt des Rechtecks angeordnet. Durch diese Anordnung der vier Dehnungsmessstreifen 20, 20', 20", 20"' entsteht ein Eingabefeld 40, innerhalb welchem die Ausübung eines Drucks auf einen Punkt zu messbaren Widerstandsänderungen der vier Dehnungsmessstreifen führt, aus deren Werten die Position der Druckausübung abgeleitet werden kann. Liegt der Druckpunkt außerhalb des Eingabefeldes 40, so wird mit wachsender Entfernung des Druckpunkts von dem Eingabefeld 40 die Genauigkeit der Positionsbestimmung des Druckpunkts und gegebenenfalls der Bestimmung der Druckkraft geringer.

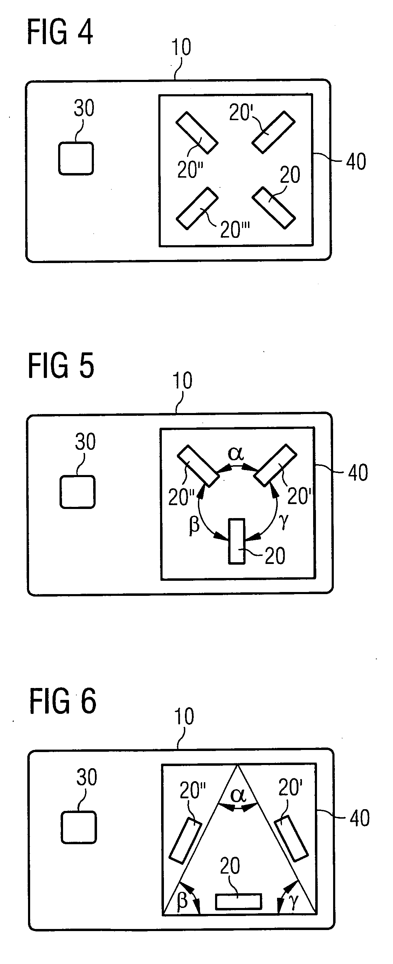

Die Figuren 3 und 4 zeigen alternative Anordnungen von vier linearen Dehnungsmessstreifen 20, 20', 20", 20"' auf einem Datenträgerkörper. In Figur 3 liegen die vier linearen Dehnungsmessstreifen 20, 20', 20", 20"' wie in Figur 2 auf den Kanten eines Rechtecks, wobei deren empfindliche Richtung nun zum Mittelpunkt des Rechtecks zeigt. In Figur 4 liegen die vier Dehnungsmessstreifen 20, 20', 20", 20"' auf den Winkelhalbierenden eines Rechtecks oder parallel zu diesen Winkelhalbierenden und zeigen jeweils zum Mittelpunkt des Rechtecks.

Wie in Figur 5 dargestellt, können auch genau drei Dehnungsmessstreifen 20, 20', 20" in Sternform oder gemäß Figur 6 in Dreiecksform, und hierbei vorzugsweise in Form eines gleichschenkligen oder gleichseitigen Dreiecks, angeordnet werden. Bei einer Anordnung in Sternform, wie in Figur 5 gezeigt, betragen die Winkel $\alpha$, $\beta$, $\gamma$ jeweils 120°. Bei der Anordnung die in Figur 6 gezeigt ist, betragen die Winkel $\alpha$, $\beta$, $\gamma$ jeweils 60°. Ganz allgemein gilt, dass eine Anordnung von Dehnungsmessstreifen vorteilhaft ist, bei der die Richtungen höchster Messempfindlichkeit der Widerstandsänderungen durch Deformationen möglichst gleich verteilt sind. Zugleich werden Dehnungsmessstreifen mit identischen Richtungen höchster Messempfindlichkeit weit voneinander positioniert (siehe Figuren 2, 3 und 4).

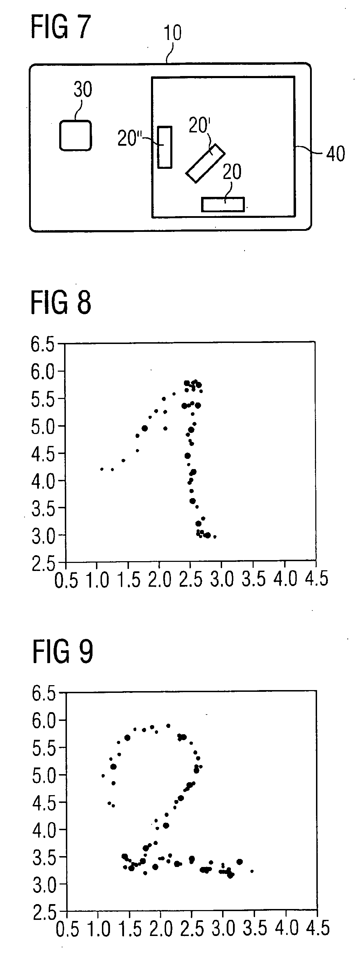

In dem in Figur 7 dargestellten Ausführungsbeispiel sind drei Dehnungsmessstreifen zueinander in Winkeln von jeweils 45° angeordnet, also auf den Kanten oder parallel zu den Kanten eines Quadrats und auf der Winkelhalbierenden oder parallel zu der Winkelhalbierenden dieses Quadrats. Das Eingabefeld 40, das heißt der Bereich der Datenträgeroberfläche, in welchem eine ausreichend genaue Bestimmung der Position eines Druckpunktes und gegebenenfalls der ausgeübten Druckkraft möglich ist, ist bei einer derartigen Anordnung deutlich größer als der durch die drei Dehnungmessstreifen 20, 20', 20" aufgespannte Bereich.

Ein Authentifizierungsmerkmal muss nicht unbedingt eine Abfolge von alphanumerischen Zeichen sein, die beispielsweise über eine Tastatur oder eine virtuelle Tastatur eingegeben werden. Vielmehr kann jedes beliebige Bewegungsmuster, zum Beispiel eine Unterschrift oder ein chinesisches Schriftzeichen oder ähnliches als Authentifizierungsmerkmal dienen. Bei der Auswertung der gemessenen Widerstandsdaten wird dabei nicht nur die Richtigkeit des sichtbaren Bildes überprüft, sondern auch die Bewegungsdynamik, beispielsweise charakterisiert durch die Strichgeschwindigkeit oder den Zeitverlauf des Drucks, der mit dem Stift ausgeübt wird. Da die Abbildungsfunktion die Bestimmung der Koordinaten der Druckpunkte gestattet, können Bewegungsmuster erkannt werden unabhängig davon, an welcher Stelle des Eingabefelds 40 das Authentifizierungsmerkmal eingegeben wird.

Diese Situation wird beispielhaft in den Figuren 8 und 9 dargestellt, in denen die Ziffern 1 und 2 in Form von einzelnen Punkten dargestellt sind, die Messwerten der Widerstände der Dehnungsmessstreifen entsprechen, die mit einer Frequenz von hundert Werten pro Sekunde aufgenommen wurden. Die Größe der Punkte ist ein Maß für den Druck, der mit dem Stift ausgeübt wurde.

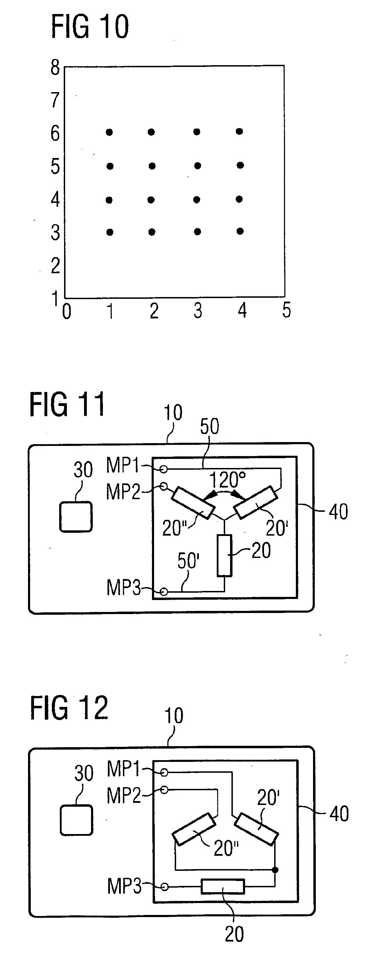

Eine derartige Anordnung von Dehnungsmessstreifen kann jedoch auch zur Bestimmung der Position von Druckpunkten verwendet werden, beispielsweise um ein Tastenfeld nachzubilden und somit eine virtuelle Tastatur auszubilden. Dabei wird, wie beispielsweise in Figur 10 gezeigt, eine quadratische Matrix von Punkten definiert, mit denen die Tasten eines Tastenfeldes logisch assoziiert sind. Wird ein Druck auf einen solchen Punkt oder in der Nähe eines solchen Punktes ausgeübt, erfolgt eine Auswertung, die dem Druck einer Taste eines Tastenfelds entspricht. Auf einem derartigen Tastenfeld können dann direkt auch durch den Druck auf entsprechend markierte Flächen persönliche Identifikationsnummern (PINs) oder andere Berechtigungscodes, wie beispielsweise Transaktionsnummern, eingegeben werden.

In Figur 11 ist eine weitere bevorzugte Ausführungsform des erfindungsgemäßen Datenträgers dargestellt, bei der die Widerstände der drei auf dem Datenträgerkörper sternförmig platzierten Dehnungsmessstreifen mit geeignet angeordneten Anschlussleitungen 50, 50' paarweise so in Reihe geschaltet sind, dass ein Strom, der zwischen je zwei der Anschluss- oder Messpunkte MP1, MP2 oder MP3 fließt, stets durch eine Reihenschaltung von zwei Dehnungsmessstreifen 20, 20', 20" fließt. Die Widerstände der einzelnen Dehnungsmessstreifen 20, 20', 20" sind identisch und betragen jeweils 60,175 oder 500 Ohm, so dass die Summen-Widerstände je zweier in Reihe geschalteten Dehnungsmessstreifen die üblichen Werte von 120, 350 oder 1000 Ohm aufweisen, für die handelsübliche A/D-Wandler verfügbar sind.

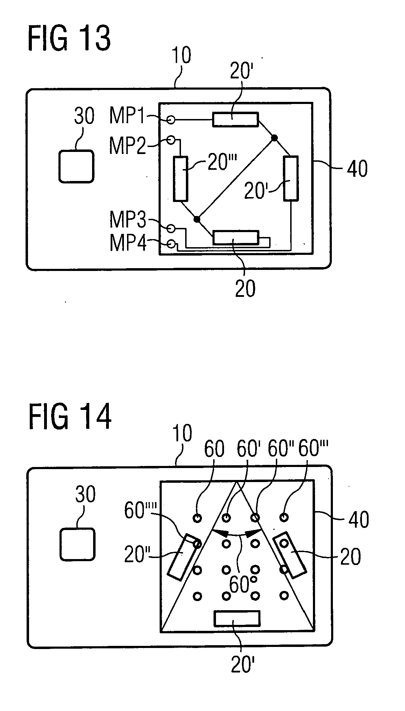

Wie sich aus Figur 12 ergibt, ist es auch bei einer Dreieckschaltung von drei Dehnungsmessstreifen 20, 20', 20" möglich, eine Verdrahtung anzugeben, bei der der Strom jeweils durch eine paarweise Reihenschaltung zweier Dehnungsmessstreifen fließt. Figur 13 zeigt eine solche Verdrahtung für eine Anordnung von vier Dehnungsmessstreifen 20, 20', 20", 20'". Auch hierbei fließt jeder Strom der von einem der Messpunkte MP1, MP2, MP3, MP4 zu einem anderen dieser Messpunkte durch eine Reihenschaltung von zwei Dehnungsmessstreifen.

Da auf diese Art und Weise nur die Summen-Widerstände zweier paarweise in Reihe geschalteter Dehnungsmessstreifen direkt messbar sind, erfordern derartige Schaltungen eine anschließende rechnerische Auswertung, bei der die einzelnen Widerstände bzw. die Änderungen dieser Widerstände unter einer Dehnung der Dehnungsmessstreifen ermittelt werden. Um aus den direkt gemessenen Summen paarweise in Reihe geschalteter Widerstände von drei Dehnungsmessstreifen die Einzelwiderstände berechnen zu können, sind drei nacheinander erfolgende Messungen zwischen den Messpunkten MP1 und MP2, zwischen den Messpunkten MP1 und MP3 sowie zwischen den Messpunkten MP2 und MP3 erforderlich. Bei diesen Messungen ergeben sich jeweils Summen-Widerstände R1 + R2, R1 + R3, sowie R2 + R3. Aus diesen drei Summen-Widerständen ergibt sich beispielsweise der Einzelwiderstand R1 rechnerisch zu

$$R1 = 1/2\,[(R1 + R2) + (R1 + R3) - (R2 + R3)].$$

Entsprechende Formeln gelten für die Einzelwiderstände R2 und R3 und auch für Situationen, in denen mehr als drei Dehnungsmessstreifen paarweise in Reihe geschaltet sind.

In Figur 14 ist ein bevorzugtes Ausführungsbeispiel eines erfindungsgemäßen portablen Datenträgers dargestellt, in dessen Eingabefeld 40 eine matrixförmige Anordnung von Kalibrierungspunkten 60, 60', 60", 60'" vorgesehen ist. Um die Anordnung der Dehnungsmessstreifen 20, 20', 20" zu kalibrieren, werden diese Kalibrierungspunkte 60, 60', 60", 60'" vorzugsweise zeitlich nacheinander von einem geeigneten Werkzeug, beispielsweise von einem beweglichen Stift, von einer Luftdruckdüse oder von einem Nadeldrucker angefahren. An jedem Kalibrierungspunkt, dessen Koordinaten im Eingabefeld dem System, welches die Kalibrierung durchführt, bekannt sind, übt das zur Kalibrierung verwendete Druckwerkzeug, also der bewegliche Stift, der Nadeldrucker, die Luftdruckdüse oder ähnliches, nacheinander verschiedene punktförmig Kräfte auf die Kalibrierungspunkte aus. Beispielsweise werden auf jeden Kalibrierungspunkt nacheinander drei unterschiedliche Kräfte ausgeübt.

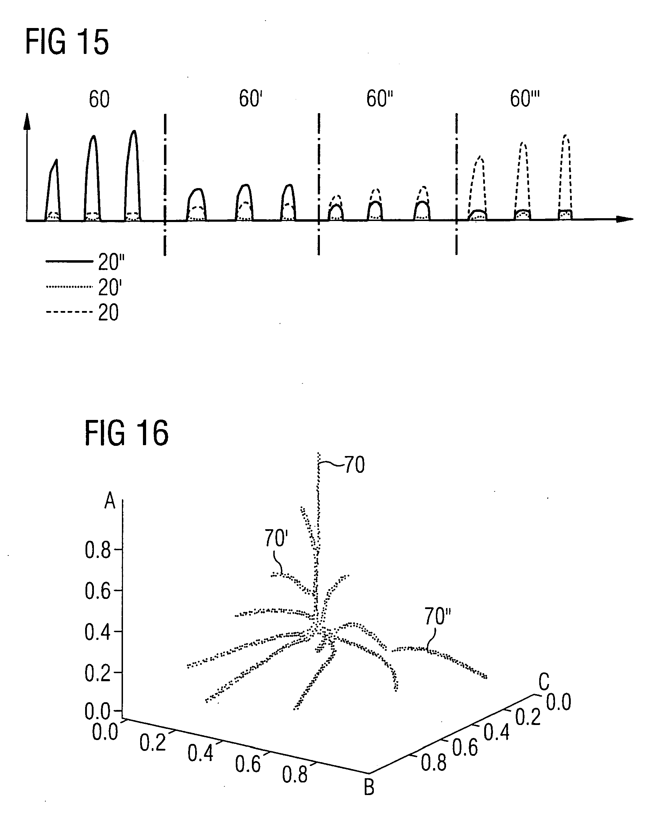

Die Figur 15 zeigt den zeitlichen Verlauf der elektrischen Widerstände der drei Dehnungsmessstreifen 20, 20', 20" wenn die vier Kalibrierungspunkte 60, 60', 60", 60'" angefahren werden und an jedem Kalibrierungspunkt drei vorbestimmte Kräfte ausgeübt werden, wobei die Kräfte an jedem Kalibrierungspunkt zunehmen und an jedem Kalibrierungspunkt die identischen drei Kräfte ausgeübt werden.

Die drei Kurven der Figur 15 zeigen den Signalverlauf der drei Dehnungsmessstreifen 20, 20', 20". Die ersten drei Ausschläge der erfassten Widerstandswerte entsprechen dem Ausüben von drei verschiedenen, zunehmenden Kräften auf den Kalibrierungspunkt 60. Entsprechend zeigen die zweiten drei Ausschläge in Figur 15 die Kalibrierung von Kalibrierungspunkt 60'. Die dritten und vierten drei Ausschläge entsprechen den Kalibrierungspunkten 60" und 60'". Wie aus Figur 15 ersichtlich, ist der Dehnungsmessstreifen 20" besonders empfindlich für den Kalibrierungspunkt 60, während der Dehnungsmessstreifen 20' besonders empfindlich für den Kalibrierungspunkt 60'" ist, der Kalibrierungspunkt 60 in der Richtung höchster Empfindlichkeit von Dehnungsmessstreifen 20" liegt und der Kalibrierungspunkt 60'" in der Richtung höchster Empfindlichkeit von Dehnungsmessstreifen 20'.

Figur 16 zeigt eine graphische Veranschaulichung, einen so genannten dreidimensionalen "Scatterplot", der bei der Kalibrierung erfassten Widerstandswerte. Jeder Punkt in dem dreidimensionalen Koordinatensystem der Figur 16, dessen Achsen die Widerstandswerte der drei Dehnungsmessstreifen 20, 20', 20" sind, repräsentiert einen Druck auf einen vorbestimmten Kalibrierungspunkt mit einer vorbestimmten Kraft. Jeder Zweig 70, 70', 70" der in Figur 16 gezeigten baumartigen Struktur entspricht dabei der Anwendung verschiedener Kräfte auf einen der sechzehn in Figur 14 gezeigten Kalibrierungspunkte. Die einzelnen Punkte eines zu einem Kalibrierungspunkt gehörigen Zweiges entsprechen unterschiedlichen auf diesen Kalibrierungspunkt ausgeübten Kräften. Jeder Punkt bildet ein Ausgangswerttupel, das heißt eine Gruppe von zusammengehörigen Widerstandswerten der drei Dehnungsmessstreifen 20, 20', 20".

Die in diesem Scatterplot der Figur 16 dargestellten Messwerte werden nun als Daten für eine mehrdimensionale Regressionsanalyse oder ein ähnliches Verfahren verwendet, mit dessen Hilfe eine Abbildungsvorschrift ermittelt wird, die die erfassten Ausgangswerttupel, also die erfassten elektrischen Widerstände der drei Dehnungsmessstreifen auf die jeweils zugehörigen Eingangswerttupel, also auf die Koordinaten der vorbestimmten Kalibrierungspunkte und den auf ihnen jeweils angewendeten vorbestimmten Kräften abbildet.

Die auf diese Weise erhaltene Abbildungsvorschrift wird dann bei der bestimmungsgemäßen Anwendung des portablen Datenträgers dazu verwendet, den bei der Anwendung, das heißt bei einem Druck auf einen oder mehrere beliebige Punkte des Eingabefeldes, registrierten Widerstandswerten der drei Dehnungsmessstreifen den zugehörigen Koordinaten der Druckpunkte im Eingabefeld und gegebenenfalls den ausgeübten Druckkräften zuzuordnen. So werden beispielsweise bei der Handschrifterkennung die zeitlichen Verläufe der Widerstände der drei Dehnungsmessstreifen erfasst und mit Hilfe der Abbildungsvorschrift ein zeitlicher Kurvenverlauf im Eingabefeld berechnet.

**Patentansprüche**

1. Verfahren zur Kalibrierung eines als Eingabefeld (40) eingerichteten deformierbaren Datenträgerkörpers (10) eines portablen Datenträgers mit mindestens drei Dehnungsmessstreifen (20, 20', 20", 20'"), **gekennzeichnet durch** die Schritte:

   a) Ausüben eines Drucks mit einer vorgegebenen Kraft auf einen vorgegebenen Kalibrierungspunkt des Eingabefeldes, wobei die vorgegebene Kraft und die Koordinaten des vorgegebenen Kalibrierungspunkts ein Eingangswerttupel bilden;
   b) Erfassen der dabei auftretenden Werte der elektrischen Widerstände der wenigstens drei Dehnungsmessstreifen, wobei die erfassten elektrischen Widerstandswerte ein dem Eingangswerttupel zugehöriges Ausgangswerttupel bilden;
   c) Wiederholen der Schritte a) und b) für eine Vielzahl von verschiedenen vorgegebenen Kalibrierungspunkten (60, 60', 60", 60'") und/oder vorgegebenen Kräften;
   d) Bestimmen einer Abbildungsvorschrift, welche die erfassten Ausgangswerttupel auf die jeweils zugehörigen Eingangswerttupel oder auf die Koordinaten der Kalibrierungspunkte der jeweils zugehörigen Eingangswerttupel abbildet.

2. Verfahren nach Anspruch 1, **dadurch gekennzeichnet, dass** die Vielzahl von Kalibrierungspunkten eine regelmäßige Anordnung auf dem Datenträgerkörper aufweist, vorzugsweise eine matrixförmige Anordnung, besonders bevorzugt eine viereckige, rechteckige, quadratische oder dreieckige, insbesondere eine gleichseitig dreieckige Anordnung.

3. Verfahren nach einem der vorhergehenden Ansprüche, **gekennzeichnet durch** den zusätzlichen Schritt:

   e) Ablegen der Abbildungsvorschrift in einer Speichereinrichtung des Datenträgers.

4. Verfahren nach einem der vorhergehenden Ansprüche, **dadurch gekennzeichnet, dass** der Druck auf den Kalibrierungspunkt oder die Vielzahl von Kalibrierungspunkten mit Hilfe eines beweglichen Stiftes, einer Luftdruckdüse oder eines Nadeldruckers ausgeübt wird.

5. Verfahren nach einem der vorhergehenden Ansprüche, **dadurch gekennzeichnet, dass** Schritt b) durch eine auf dem Datenträger angeordnete Erfassungseinrichtung ausgeführt wird.

6. Verfahren nach einem der vorhergehenden Ansprüche, **dadurch gekennzeichnet, dass** das Bestimmen der Abbildungsvorschrift mit Hilfe einer mehrdimensionalen Regressionsanalyse geschieht.

7. Portabler Datenträger, umfassend einen als Eingabefeld (40) eingerichteten deformierbaren Datenträgerkörper (10) mit mindestens drei Dehnungsmessstreifen (20, 20', 20", 20'''), und

   - eine Erfassungseinrichtung, die eingerichtet ist, die Werte der elektrischen Widerstände der wenigstens drei Dehnungsmessstreifen zu erfassen,

   **gekennzeichnet durch**

   - eine Speichereinrichtung (30), in der eine Abbildungsvorschrift abgelegt ist, die bei Anwendung auf die Werte der elektrischen Widerstände der wenigstens drei Dehnungsmessstreifen, die sich ergeben, wenn auf einen Druckpunkt des Eingabefeldes ein Druck mit einer Druckkraft ausgeübt wird, zumindest die Koordinaten des Druckpunkts bestimmt.

8. Portabler Datenträger nach Anspruch 7, **dadurch gekennzeichnet, dass** die Abbildungsvorschrift zudem die Druckkraft bestimmt.

9. Portabler Datenträger nach einem der Ansprüche 7 oder 8, weiterhin **gekennzeichnet durch** eine Recheneinrichtung, die zur Ausführung der Abbildungsvorschrift eingerichtet ist, und/oder die Abbildungsvorschrift mit Hilfe eines Verfahrens nach einem der Ansprüche 1 bis 6 bestimmt wurde.

10. Portabler Datenträger nach einem der Ansprüche 7 bis 9, **dadurch gekennzeichnet, dass** die wenigstens drei Dehnungsmessstreifen parallel zu oder auf den Kanten oder Winkelhalbierenden eines Dreiecks, vorzugsweise eines gleichseitigen Dreiecks, oder eines Quadrats angeordnet sind.

11. Portabler Datenträger nach einem der Ansprüche 7 bis 10, **dadurch gekennzeichnet, dass** die wenigstens drei Dehnungsmessstreifen als gedruckte oder geätzte elektrisch leitfähige Struktur ausgebildet sind.

12. Portabler Datenträger nach einem der Ansprüche 7 bis 11, **dadurch gekennzeichnet, dass** der Datenträgerkörper (10) mehrschichtig ausgebildet ist und zumindest eine Schicht des Datenträgerkörpers (10) seitlich und/ oder oberhalb und/ oder unterhalb des zumindest einen der Dehnungsmessstreifen (20, 20', 20", 20''') eine Aussparung ausweist.

13. Portabler Datenträger nach einem der Ansprüche 7 bis 12, **dadurch gekennzeichnet, dass** die Anschlussleitungen (50, 50') und Anschlusspunkte (MP1, MP2, MP3, MP4) der Dehnungsmessstreifen, über welche die Werte der elektrischen Widerstände der Dehnungsmessstreifen erfasst werden, derart angeordnet sind, dass die Dehnungsmessstreifen derart elektrisch miteinander verschaltet sind, dass ein Strom, der durch je zwei Anschlusspunkte fließt, stets durch zwei elektrisch in Reihe geschaltete Dehnungsmessstreifen fließt.

14. Portabler Datenträger nach einem der Ansprüche 7 bis 13, **dadurch gekennzeichnet, dass** die Erfassungseinrichtung zur Bestimmung der elektrischen Widerstände der Dehnungsmessstreifen anhand einer Mehrzahl von Messungen der elektrischen Summen-Widerstände von paarweise in Reihe geschalteten Dehnungsmessstreifen eingerichtet ist, wobei die Erfassungseinrichtung vorzugsweise eingerichtet ist, die Mehrzahl von Messungen hintereinander durchzuführen.

15. Verfahren zur Herstellung eines portablen Datenträgers nach einem der Ansprüche 7 bis 14, umfassend ein Verfahren zur Kalibrierung nach einem der Ansprüche 1 bis 6.

16. Verfahren nach Anspruch 15, umfassend den Schritt des Aufdruckens oder Ätzens einer elektrisch leitfähigen Struktur auf den Datenträgerkörper zum Bilden von zumindest einem Dehnungsmessstreifen.

17. Verfahren zum Betrieb eines portablen Datenträgers mit einem als Eingabefeld (40) eingerichteten deformierbaren Datenträgerkörper (10) mit mindestens drei Dehnungsmessstreifen (20, 20', 20", 20'''), **gekennzeichnet durch** die Schritte:

A) Erfassen der infolge eines auf einen Druckpunkt des Eingabefeldes mit einer Druckkraft ausgeübten Drucks auftretenden Werte der elektrischen Widerstände der mindestens drei Dehnungsmessstreifen, und
B) Bestimmen der Koordinaten des Druckpunkts **durch** Anwendung einer Abbildungsvorschrift auf die erfassten Werte der elektrischen Widerstände.

18. Verfahren nach Anspruch 17, **dadurch gekennzeichnet, dass** durch Anwendung der Abbildungsvorschrift zudem die Druckkraft bestimmt wird.

19. Verfahren nach einem der Ansprüche 17 oder 18, **dadurch gekennzeichnet, dass** die Abbildungsvorschrift in einer auf dem Datenträger angeordneten Recheneinrichtung (30) ausgeführt wird und/ oder die Abbildungsvorschrift mit Hilfe eines Verfahrens nach einem der Ansprüche 1 bis 6 bestimmt wurde.

20. Verfahren nach einem der Ansprüche 17,18 oder 19, **dadurch gekennzeichnet, dass** in Schritt A) eine Mehrzahl von Messungen der elektrischen Summen-Widerstände von paarweise in Reihe geschalteten Dehnungsmessstreifen durchgeführt wird, wobei die Mehrzahl von Messungen vorzugsweise hintereinander durchgeführt werden.

21. Verwendung eines portablen Datenträgers nach einem der Ansprüche 7 bis 14 als Taster, als Tastatur oder als Touchpad, insbesondere zur Handschriften- oder Unterschriftenerkennung oder -erfassung.

**Claims**

1. A method for calibrating a deformable data-carrier body (10), arranged as an input field (40), of a portable data carrier having at least three strain gauge strips (20, 20', 20", 20'''), **characterized by** the steps of:

   a) exerting a pressure with a preset force on a preset calibration point of the input field, with the preset force and the coordinates of the preset calibration point forming an input value tuple;
   b) capturing the thereby occurring values of the electrical resistances of the at least three strain gauge strips, with the captured electrical resistance values forming an output value tuple appurtenant to the input value tuple;
   c) repeating the steps a) and b) for a multiplicity of different preset calibration points (60, 60', 60", 60''') and/or preset forces;
   d) determining a mapping rule which maps the captured output value tuple onto the respective appurtenant input value tuple or onto the coordinates of the calibration points of the respective appurtenant input value tuple.

2. The method according to claim 1, **characterized in that** the multiplicity of calibration points have a regular arrangement on the data-carrier body, preferably a matrix arrangement, particularly preferably a quadrangular, rectangular, square or triangular, in particular an equilaterally triangular, arrangement.

3. The method according to either of the preceding claims, **characterized by** the additional step of:

   e) storing the mapping rule in a memory device of the data carrier.

4. The method according to any of the preceding claims, **characterized in that** the pressure on the calibration point or the multiplicity of calibration points is exerted using a movable pin, an air pressure nozzle or a dot-matrix printer.

5. The method according to any of the preceding claims, **characterized in that** step b) is performed by a capture device disposed on the data carrier.

6. The method according to any of the preceding claims, **characterized in that** the determining of the mapping rule is done using a multidimensional regression analysis.

7. A portable data carrier, comprising a deformable data-carrier body (10) arranged as an input field (40) and having at least three strain gauge strips (20, 20', 20", 20'''), and a capture device which is arranged for capturing the values of the electrical resistances of the at least three strain gauge strips,
   **characterized by**

   - a memory device (30) having a mapping rule stored therein which, when applied to the values of the electrical resistances of the at least three strain gauge strips that result when a pressure is exerted with a compressive force on a pressure point of the input field, determines at least the coordinates of the pressure point.

8. The portable data carrier according to claim 7, **characterized in that** the mapping rule moreover determines the compressive force.

9. The portable data carrier according to either of claims 7 to 8, further **characterized by** a computing device which is arranged for executing the mapping rule, and/or the mapping rule was determined using a method according to any of claims 1 to 6.

10. The portable data carrier according to any of claims 7 to 9, **characterized in that** the at least three strain gauge strips are disposed parallel to or on the edges or angle bisectors of a triangle, preferably of an equilateral triangle, or of a square.

11. The portable data carrier according to any of claims 7 to 10, **characterized in that** the at least three strain gauge strips are configured as printed or etched electrically conductive structures.

12. The portable data carrier according to any of claims 7 to 11, **characterized in that** the data-carrier body (10) is of multilayer configuration and at least one layer of the data-carrier body (10) has a recess laterally and/or above and/or below the at least one of the strain gauge strips (20, 20', 20", 20"').

13. The portable data carrier according to any of claims 7 to 12, **characterized in that** the connection leads (50, 50') and connection points (MP1, MP2, MP3, MP4) of the strain gauge strips via which the values of the electrical resistances of the strain gauge strips are captured are disposed such that the strain gauge strips are switched together electrically such that a current flowing through a pair of connection points always flows through two electrically series-switched strain gauge strips.

14. The portable data carrier according to any of claims 7 to 13, **characterized in that** the capture device is arranged for determining the electrical resistances of the strain gauge strips by a plurality of measurements of the electrical sum resistances of pairwise series-switched strain gauge strips, with the capture device preferably being arranged for carrying out the plurality of measurements one after the other.

15. A method for manufacturing a portable data carrier according to any of claims 7 to 14, comprising a calibration method according to any of claims 1 to 6.

16. The method according to claim 15, comprising the step of imprinting or etching an electrically conductive structure on the data-carrier body for forming at least one strain gauge strip.

17. A method for operating a portable data carrier having a deformable data-carrier body (10) arranged as an input field (40) and having at least three strain gauge strips (20, 20', 20", 20"'), **characterized by** the steps of:

A) capturing the values of the electrical resistances of the at least three strain gauge strips that occur as a result of a pressure exerted with a compressive force on a pressure point of the input field, and
B) determining the coordinates of the pressure point by applying a mapping rule to the captured values of the electrical resistances.

18. The method according to claim 17, **characterized in that** the compressive force is moreover determined by applying the mapping rule.

19. The method according to either of claims 17 to 18, **characterized in that** the mapping rule is executed in a computing device (30) disposed on the data carrier and/or the mapping rule was determined using a method according to any of claims 1 to 6.

20. The method according to any of claims 17, 18 or 19, **characterized in that** in step A) a plurality of measurements of the electrical sum resistances of pairwise series-switched strain gauge strips are carried out, with the plurality of measurements preferably being carried out one after the other.

21. Use of a portable data carrier according to any of claims 7 to 14 as a sensing device, as a keyboard or as a touchpad, in particular for recognizing or capturing handwriting or signatures.

**Revendications**

1. Procédé d'étalonnage d'un corps de support de données (10) déformable, équipé en tant que champ d'entrée (40), d'un support de données portable, ayant au moins trois jauges extensométriques (20, 20',20",20"'), **caractérisé par** les étapes:

   a) exercice d'une pression avec une force donnée sur un point d'étalonnage donné du champ d'entrée, la force donnée et les coordonnées du point d'étalonnage donné constituant un tuple de valeur d'entrée;

   b) saisie des valeurs des résistances électriques ainsi obtenues des au moins trois jauges extensométriques, les valeurs des résistances électriques saisies constituant un tuple de valeur de sortie correspondant au tuple de valeur d'entrée;

   c) réitération des étapes a) et b) pour une pluralité de différents points d'étalonnage donnés (60, 60',60",60"') et/ou de forces données;

   d) détermination d'une spécification de représentation qui représente les tuples de valeur de sortie saisis sur les tuples de valeur d'entrée respectivement correspondants ou sur les coordonnées des points d'étalonnage des tuples de valeur d'entrée respectivement correspondants.

2. Procédé selon la revendication 1, **caractérisé en ce que** la pluralité de différents points d'étalonnage présente un agencement régulier sur le support de données, de préférence un agencement matriciel, particulièrement de préférence un agencement quadrangulaire, rectangulaire, quadratique ou triangulaire, notamment triangulaire équilatéral.

3. Procédé selon une des revendications précédentes, **caractérisé par** l'étape supplémentaire:

   e) stockage de la spécification de représentation dans un dispositif de mémorisation du support de données.

4. Procédé selon une des revendications précédentes, **caractérisé en ce que** la pression est exercée sur le point d'étalonnage ou sur la pluralité de points d'étalonnage à l'aide d'une tige mobile, d'une buse à pression d'air ou d'une imprimante à aiguilles.

5. Procédé selon une des revendications précédentes, **caractérisé en ce que** l'étape b) est exécutée par un dispositif de saisie agencé sur le support de données.

6. Procédé selon une des revendications précédentes, **caractérisé en ce que** la détermination de la spécification de représentation a lieu à l'aide d'une analyse de régression multidimensionnelle.

7. Support de données portable, comprenant un corps de support de données (10) déformable, équipé en tant que champ d'entrée (40), ayant au moins trois jauges extensométriques (20, 20',20",20"'), et un dispositif de saisie qui est équipé pour saisir les valeurs des résistances électriques des au moins trois jauges extensométriques, **caractérisé par** un dispositif de mémorisation (30) dans lequel une spécification de représentation est stockée, laquelle, lors de l'application sur les valeurs des résistances électriques des au moins trois jauges extensométriques obtenues quand une pression avec une force de pression est exercée sur un point de pression du champ d'entrée, détermine au moins les coordonnées du point de pression.

8. Support de données portable selon la revendication 7, **caractérisé en ce que** la spécification de représentation détermine en outre la force de pression.

9. Support de données portable selon une des revendications 7 ou 8, **caractérisé de plus par** un dispositif de calcul qui est équipé pour exécuter la spécification de représentation, et/ou en ce que la spécification de représentation fut déterminée à l'aide d'un procédé selon une des revendications de 1 à 6.

10. Support de données portable selon une des revendications de 7 à 9, **caractérisé en ce que** les au moins trois jauges extensométriques sont agencées parallèlement aux ou sur les côtés ou bissectrices d'un triangle, de préférence d'un triangle équilatéral, ou d'un carré.

11. Support de données portable selon une des revendications de 7 à 10, **caractérisé en ce que** les au moins trois jauges extensométriques sont réalisées sous forme de structure électriquement conductrice imprimée ou gravée.

**12.** Support de données portable selon une des revendications de 7 à 11, **caractérisé en ce que** le corps de support de données (10) est réalisé sous forme multicouche et **en ce qu'**au moins une couche du corps de support de données (10) comporte, latéralement au et/ou au-dessus du et/ou en-dessous de la au moins une des trois jauges extensométriques (20, 20',20",20'''), un évidement.

**13.** Support de données portable selon une des revendications de 7 à 12, **caractérisé en ce que** les conduites de connexion (50, 50') et les points de connexion (MP1, MP2, MP3, MP4) des jauges extensométriques par l'intermédiaire desquels les valeurs des résistances électriques des jauges extensométriques sont saisies sont agencés de telle façon que les jauges extensométriques sont reliées électriquement entre elles de telle façon qu'un courant qui passe par respectivement deux connexions passe toujours par deux jauges extensométriques couplées électriquement en série.

**14.** Support de données portable selon une des revendications de 7 à 13, **caractérisé en ce que** le dispositif de saisie est équipé pour la détermination des résistances électriques des jauges extensométriques au moyen d'une pluralité de mesures des totaux de résistances électriques de jauges extensométriques couplées électriquement en série par paires, le dispositif de saisie étant de préférence équipé pour exécuter la pluralité de mesures les unes après les autres.

**15.** Procédé de fabrication d'un support de données portable selon une des revendications de 7 à 14, comprenant un procédé d'étalonnage selon une des revendications de 1 à 6.

**16.** Procédé selon la revendication 15, comprenant l'étape de l'impression ou de la gravure d'une structure électriquement conductrice imprimée ou gravée sur le corps de support de données pour constituer au moins une jauge extensométrique.

**17.** Procédé de fonctionnement d'un support de données portable comprenant un corps de support de données (10) déformable équipé en tant que champ d'entrée (40) et ayant au moins trois jauges extensométriques (20, 20',20",20'''), **caractérisé par** les étapes:

A) saisie des valeurs des résistances électriques des au moins trois jauges extensométriques obtenues à la suite d'une pression exercée avec une force de pression sur un point de pression du champ d'entrée, et
B) détermination des coordonnées du point de pression par l'application d'une spécification de représentation sur les valeurs saisies des résistances électriques.

**18.** Procédé selon la revendication 17, **caractérisé en ce que**, par l'application de la spécification de représentation, la force de pression est en outre déterminée.

**19.** Procédé selon une des revendications 17 ou 18, **caractérisé en ce que** la spécification de représentation est exécutée sur un dispositif de calcul (30) agencé sur le support de données et/ou **en ce que** la spécification de représentation fut déterminée à l'aide d'un procédé selon une des revendications de 1 à 6.

**20.** Procédé selon une des revendications 17, 18 ou 19, **caractérisé en ce que**, à l'étape A), une pluralité de mesures des totaux de résistances électriques de jauges extensométriques couplées en série par paires est exécutée, la pluralité de mesures étant de préférence exécutées les unes après les autres.

**21.** Utilisation d'un support de données portable selon une des revendications de 7 à 14 en tant que palpeur, en tant que clavier ou en tant que pavé tactile, notamment pour la reconnaissance ou la saisie d'écriture ou de signature.

FIG 1

FIG 2

FIG 3

FIG 4

FIG 5

FIG 6

## FIG 7

## FIG 8

## FIG 9

## FIG 10

## FIG 11

## FIG 12

**FIG 13**

**FIG 14**

## FIG 15

60    60'    60"    60'''

——— 20"
············ 20'
------- 20

## FIG 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007113722 A1